# EUROPÄISCHE PATENTSCHRIFT

(11) **EP 0 439 995 B1**
(45) Veröffentlichungstag und Bekanntmachung des Hinweises auf die Patenterteilung: **26.05.1993**
(21) Anmeldenummer: 90810949.9
(22) Anmeldetag: 05.12.1990
(51) Int. Cl.: F02F 3/00, F02F 3/22

(54) **Kolben für eine Viertakt-Brennkraftmaschine**
Piston for a four-stroke internal combustion engine
Piston pour une machine à quatre temps, à combustion interne

(30) Priorität: 30.01.1990 CH 290/90
(43) Veröffentlichungstag der Anmeldung: 07.08.1991
(73) Patentinhaber: GEBRÜDER SULZER AKTIENGESELLSCHAFT, CH-8401 Winterthur (CH)
(72) Erfinder: Schärer, Juan-Manuel, CH-8363 Bichelsee (CH)

(56) Entgegenhaltungen:
- DE-B- 1 045 172
- DE-C- 3 702 694
- FR-A- 1 383 334
- MTZ (Motortechnische Zeitschrift 1978, Heft 9, Seite 364 (Bild 21)

## Beschreibung

Die Erfindung bezieht sich auf einen Kolben, vorzugsweise Schaltkolben, für eine Hubkolbenbrennkraftmaschine der Viertaktbauart, der aus einem dem Brennraum zugewendeten Kolbenoberteil aus Stahl und einem dem Brennraum abgewendeten Kolbenunterteil aus Gusseisen besteht, wobei die beiden Kolbenteile mittels sich in axialer Richtung erstreckender, auf einem Kreis angeordneter Schrauben zusammengehalten sind und der Kolbenoberteil mit einer ringförmigen Auflagefläche an dem Kolbenunterteil anliegt und wobei im Kolbenunterteil ein Lager für das eine Ende einer Pleuelstange vorgesehen ist, über die flüssiges Kühlmittel dem Kolbenoberteil zugeführt wird, der gegen den Brennraum gerichtete, von Kühlmittel beaufschlagte Sackbohrungen aufweist.

Ein solcher Kolben ist aus der Zeitschrift MTZ (Motortechnische Zeitschrift) 1978, Heft 9, Seite 364, Bild 21, bekannt. Bei diesem Kolben erstrecken sich die Schrauben durch die ringförmige Auflagefläche des Kolbenoberteils und die innerhalb der ringförmigen Auflagefläche befindliche Fläche des Kolbenoberteils wird von einem Hohlraum eingenommen, der über die Pleuelstange mit flüssigem Kühlmittel versorgt wird. Von dem Hohlraum gehen, über den ganzen Kolbenoberteil verteilt, gegen den Brennraum gerichtete Sackbohrungen aus, in die das Kühlmittel durch die Auf- und Abwärtsbewegung des Kolbens gelangt. Diese Art Kühlung wird auch als Planschkühlung bezeichnet. Diese Kolbenbauart hat sich im allgemeinen bei relativ niederen Zünddrücken bewährt. Die Entwicklungstendenz geht jedoch dahin, die Zünddrücke zu erhöhen, und zwar auf mehr als 200 bar.

Der Erfindung liegt die Aufgabe zugrunde, den Kolben der eingangs genannten Art dahingehend zu verbessern, dass er für Zünddrücke oberhalb 200 bar geeignet ist.

Diese Aufgabe wird erfindungsgemäss dadurch gelöst, dass die Sackbohrungen ebenfalls ausserhalb der ringförmigen Auf lagefläche angeorndet sind und dass in jeder Sackbohrung eine Spritzdüse angeordnet ist, die zur Kühlmittelversorgung über einen Kanal im Kolbenunterteil mit dem Pleuelstangenlager verbunden ist. Dadurch dass die ringförmige Auflagefläche vom Schraubenkreis weg zum Kolbenzentrum hin verschoben ist, ergibt sich eine massive und widerstandsfähige Struktur des Kolbenoberteils, bei dem eine gleichmässige Uebertragung der bei der Verbrennung freiwerdenden Kräfte auf den Kolbenunterteil und die Pleuelstange sichergestellt ist. Dadurch, dass die Sackbohrungen mit Spritzdüsen versehen sind, ergibt sich eine gezielte und effiziente Kühlung der vom grössten Wärmeeinfall betroffenen Abschnitte des Kolbenoberteils.

Ein Ausführungsbeispiel der Erfindung ist in derfolgenden Beschreibung anhand der Zeichnung näher erläutert. Es zeigen:
Fig. 1 einen Axialschnitt entsprechend der Linie I - in Fig. 3 durch einen Kolben und einen Teil des umgebenden Zylinders,
Fig. 2 eine Ansicht des Kolbenoberteils aus Richtung A in Fig. 1 und
Fig. 3 eine Draufsicht auf den Kolbenunterteil.

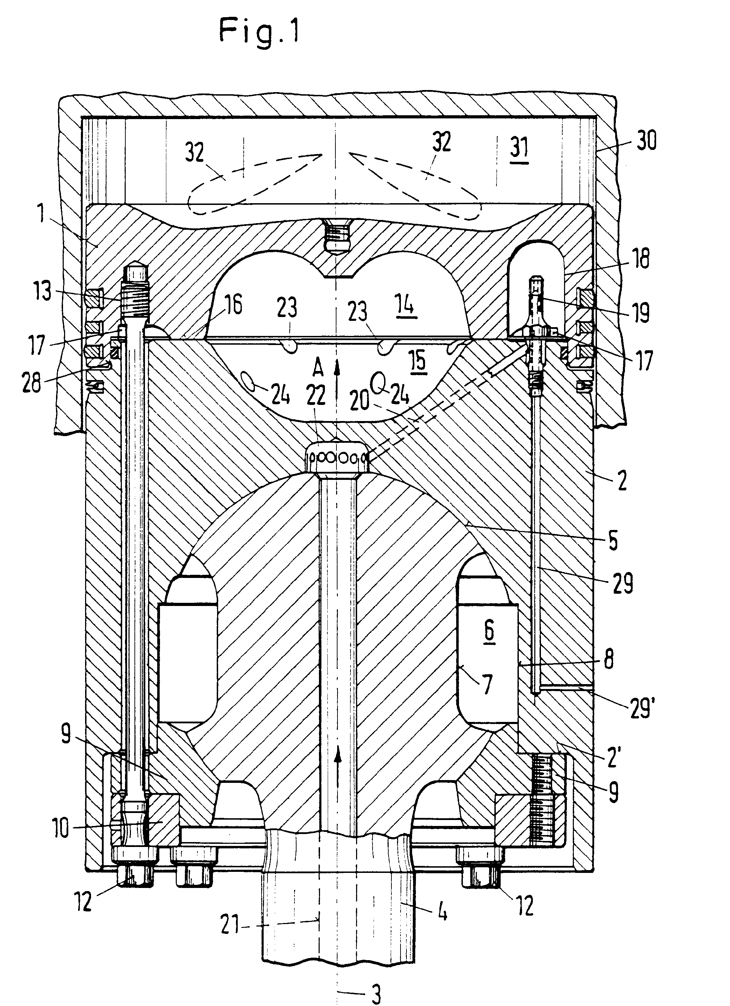

Gemäss Fig. 1 besteht der Kolben im wesentlichen aus einem Kolbenoberteil 1 aus Stahl und einem Kolbenunterteil 2 aus Gusseisen, vorzugsweise Sphäroguss. Der Kolben ist für eine Viertakt-Dieselmaschine bestimmt und bewegt sich in einem Zylinder 30, der in Fig. 1 nur schematisch dargestellt ist. Der Zylinder 30 und der Kolbenoberteil 1 begrenzen einen Brennraum 31, in den über ein nicht näher dargestelltes Einspritzventil Brennstoff eingespritzt wird. Zwei der radial und gegen den Kolbenoberteil 1 geneigten Brennstoffstrahlen 32 sind in Fig. 1 angedeutet. Der Kolben ist als sogenannter Schaltkolben ausgebildet, d.h. er dreht sich im Betrieb in kleinen Schritten um seine Längsachse 3, wobei jeder Bewegungsschritt von der Schwenkbewegung einer im Kolbenunterteil 2 gelagerten Pleuelstange 4 ausgelöst wird. Das obere Ende der Pleuelstange 4 ist zu diesem Zweck als Kugelkopf ausgebildet, der in einer entsprechenden kugeligen Ausdrehung 5 des Kolbenunterteils 2 ruht. Im Raum 6 zwischen einer ringnutartigen Aussparung 7 im Kugelkopf und einer Begrenzungsfläche 8 des Kolbenunterteils ist eine nicht näher dargestellte Schaltvorrichtung untergebracht, die in bekannter Weise freilaufartig die Schwenkbewegung der Pleuelstange in die Drehbewegung des Kolbens umsetzt. Auf der in Fig. 1 unteren Seite des Kugelkopfes der Pleuelstange 4 ist eine ringförmige Kugelschale 9 vorgesehen, die mit ihrem Flansch 9' zwischen einer Schulter 2' des Kolbenunterteils 2 und einem Stützring 10 im Kolbenunterteil fixiert ist. Durch den Stützring 10, den Flansch 9' und den Kolbenunterteil 2 erstrecken sich acht auf einem Kreis angeordnete Dehnschrauben 12, die mit ihrem in Fig. 1 oberen Gewindeende in entsprechende Gewindesacklöcher 13 des Kolbenoberteils 1 eingeschraubt sind.

Im Kolbenoberteil 1 ist in dessen zentralem Bereich ein gegen den Kolbenunterteil 2 offener, gewölbeartiger Raum 14 ausgespart, dem ein muldenartiger Raum 15 gegenüberliegt, der im Kolbenunterteil 2 ausgespart ist. Zwischen dem Raum 14 und der Reihe von Dehnschrauben 12 ist im Kolbenoberteil 1 eine ringförmige, sich rechtwinklig zur Achse 3 erstreckende Auflagefläche 16 ausgebildet, die vollständig innerhalb des Schraubenkreises liegt, indem sich an die radial aussen liegende Begrenzungslinie der Auflagefläche 16 eine in den Kolbenoberteil eingearbeitete Ringnut 17 anschliesst, die von den Bolzen der Dehnschrauben 12 durchdrungen wird. Ausserhalb der Ringnut 17 ist im Kolbenunterteil 2 eine Umfangsnut 28 vorgesehen, in die ein gegenüber der Auflagefläche 16 vorspringender Wandabschnitt des Kolbenoberteils 1 ragt, ohne dass die untere Stirnfläche dieses Wandabschnitts die Schulter der Umfangsnut 28 berührt. Die Kraftübertragung zwischen den beiden Kolbenteilen 1 und 2 findet also nur über die Auflagefläche 16 statt.

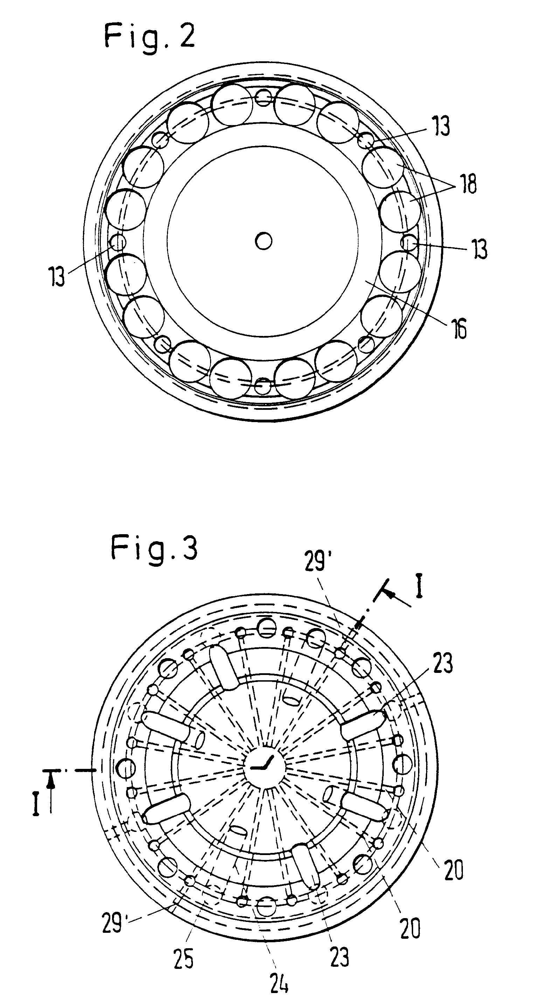

Wie Fig. 2 erkennen lässt, befinden sich im Kolbenoberteil 1 zwischen je zwei Gewindelöchern 13 zwei Sackbohrungen 18, die ausserhalb der Auflagefläche 16 liegen und sich von unten her in den Kolbenoberteil erstrecken (Fig. 1). Jede der Sackbohrungen 18 ist mit einer Spritzdüse 19 ausgestattet, die von unten in die Sackbohrung ragt und im Kolbenunterteil 2 befestigt ist. Jede Spritzdüse 19 steht mit einer Kühlmittelbohrung 20 in Verbindung, die sich von der jeweiligen Spritzdüse aus schräg nach unten durch den Kolbenunterteil 2 erstreckt. Die Kühlmittelzufuhr erfolgt über die Pleuelstange 4, die in ihrem Zentrum mit einer durchgehenden Bohrung 21 versehen ist, die an ihrem oberen Ende in einen Raum 22 des Kolbenunterteils mündet, von dem die Bohrungen 20 ausgehen. Die Sackbohrungen 18 stehen untereinander über die Ringnut 17 in Verbindung und haben über sechs radiale Nuten 23 Verbindung mit dem Raum 14, 15 (Fig. 3). Die radialen Nuten 23 sind in die an der Auflagefläche 16 anliegende Berührungsfläche des Kolbenunterteils 2 eingearbeitet. Das über die Spritzdüsen 19 in die Sackbohrungen 18 eingespritzte Kühlmittel gelangt also über die radialen Nuten 23 in den Raum 15.

Etwas oberhalb der tiefsten Stelle des Raumes 15 gehen von diesem vier Bohrungen 24 aus, die sich schräg abwärts nach aussen durch den Kolbenunterteil 2 erstrecken und in je eine axial im Kolbenunterteil angebrachte, nach unten offene Sackbohrung 25 münden. Das sich im Raum 15 sammelnde Kühlmittel fliesst also über die Bohrungen 24 und 25 in den unterhalb des Kolbens befindlichen Kurbelraum ab.

Wie Fig. 1 zeigt, erstreckt sich unterhalb der Spritzdüse 19 eine axiale Sackbohrung 29, die an ihrem unteren Ende in eine radiale Bohrung 29' übergeht, die in die Umfangsfläche des Kolbenunterteils 2 mündet. Die Bohrungen 29 und 29' sind im Kolben zweimal vorhanden (Fig. 3), und über diese Bohrungen kann der Kolbenlauffläche Kühlmittel als Schmiermittel zugeführt werden.

Das über die Bohrung 21 der Pleuelstange 4 zugeführte Kühlmittel ist in der Regel das Schmieröl, das auch die Kurbelwelle schmiert. Durch die Spritzdüsen 19 wird es möglich, die von der Wärme im Brennraum 31 am stärksten beanspruchten Abschnitte des Kolbenoberteils 1 gezielt und intensiv zu kühlen. Durch das Anordnen der Auflagefläche 16 vollständig innerhalb des Schraubenkreises ergibt sich eine stabile Gestaltung des Kolbenoberteils, was Zünddrücke von mehr als 200 bar zulässt, wozu auch die kugelförmige Ausbildung des Pleuellagers im Kolbenunterteil beiträgt.

Abweichend von der beschriebenen axialen Anordnung der Sacklöcher 18 ist es auch möglich, diese schräg, z.B. zur Brennraummitte hin geneigt anzuordnen.

## Patentansprüche

1. Kolben, vorzugsweise Schaltkolben, für eine Hubkolbenbrennkraftmaschine der Viertaktbauart, der aus einem dem Brennraum zugewendeten Kolbenoberteil (1) aus Stahl und einem dem Brennraum abgewendeten Kolbenunterteil (2) aus Gusseisen besteht, wobei die beiden Kolbenteile mittels sich in axialer Richtung erstreckender, auf einem Kreis angeordneter Schrauben (12) zusammengehalten sind und der Kolbenoberteil (1) mit einer ringförmigen Auflagefläche (16) an dem Kolbenunterteil anliegt und wobei im Kolbenunterteil ein Lager für das eine Ende einer Pleuelstange (4) vorgesehen ist, über die flüssiges Kühlmittel dem Kolbenoberteil zugeführt wird, der gegen den Brennraum gerichtete, von Kühlmittel beaufschlagte Sackbohrungen (18) aufweist, dadurch gekennzeichnet, dass die Schrauben (12) vollständig ausserhalb der ringförmigen Auflagefläche (16) angeordnet sind, dass die Sackbohrungen (18) ebenfalls ausserhaib der ringförmigen Aufiagefiäche (16) angeordnet sind und dass in jeder Sackbohrung (18) eine Spritzdüse (19) angeordnet ist, die zur Kühlmittelversorgung über einen Kanal (20) im Kolbenunterteil (2) mit dem Pleuelstangenlager verbunden ist.

2. Kolben nach Anspruch 1, dadurch gekennzeichnet, dass innerhalb der ringförmigen Auflagefläche (16) zwischen dem Kolbenoberteil (1) und dem Kolbenunterteil (2) ein Hohlraum (14) ausgebildet ist, der das aus den Sackbohrungen (18) abströmende Kühlmittel aufnimmt.

3. Kolben nach Anspruch 2, dadurch gekennzeichnet, dass der Hohlraum (14) über radiale, in der die Auflagefläche (16) berührenden Fläche des Kolbenunterteils (2) angebrachte Nuten (23) mit den Sacklöchern (18) in Verbindung steht.

4. Kolben nach einem der Ansprüche 1 bis 3, dadurch gekennzeichnet, dass das im Kolbenunterteil (2) gelagerte Ende der Pleuelstange (4) als Kugelkopf ausgebildet ist.

## Claims

1. A piston, preferably an indexing or rotating piston, for a four-stroke reciprocating internal combustion engine, the piston comprising a steel crown (1) near the combustion chamber and a cast iron skirt (2) remote therefrom, the two piston parts being held together by means of axially extending screws (12) arranged in a circle, the crown (1) engaging by way of an annular contact or bearing surface (16) with the skirt, there being disposed therein a bearing for one end of a connecting rod (4) through which liquid coolant is supplied to the crown, the same having blind bores (18) which are directed towards the combustion chamber and which are supplied with coolant, characterised in that the screws (12) are disposed completely outside the annular contact or bearing surfaces (16), the blind bores (18) are also disposed outside such surface (16) and each blind bore (18) receives a spray nozzle (19) connected for coolant supply to the connecting rod bearing by way of a duct (20) in the skirt (2).

2. A piston according to claim 1, characterised in that a cavity (14) receiving the coolant discharging from the blind bores (18) is present inside the annular contact or bearing surface (16) between the skirt (2) and crown (1) of the piston.

3. A piston according to claim 2, characterised in that the cavity (14) communicates with the blind bores (18) by way of radial grooves (23) in the skirt surface which contacts the contact or bearing surface (16) of the crown.

4. A piston according to any of claims 1 - 3, characterised in that the connecting rod end mounted in the skirt (2) is in the form of a ball head.

## Revendications

1. Piston, de préférence piston tournant destiné à un moteur à combustion interne à pistons à mouvements alternatifs du type à quatre temps, ledit piston se composant d'une partie supérieure (1) d'acier tournée vers la chambre de combustion et d'une partie inférieure (2) en fonte de fer qui est tournée du côté opposé à celui de la chambre de combustion, les deux parties du piston étant assemblées par des vis (12) disposées sur un cercle et orientées en direction axiale et la partie supérieure (1) du piston reposant sur la partie inférieure de ce dernier par une surface annulaire d'appui (16) et la partie inférieure du piston comportant un coussinet pour l'extrémité d'une bielle (4) par laquelle de l'agent liquide de refroidissement est dirigé sur la partie supérieure du piston qui comporte des trous borgnes tournés vers la chambre de combustion et dans lesquels circule l'agent de refroidissement, caractérisé en ce que les vis (12) sont disposées entièrement à l'extérieur de la surface annulaire d'appui (16), en ce que les trous borgnes (18) sont également disposés à l'extérieur de la surface annulaire d'appui (16) et en ce qu'un gicleur (19) disposé dans chaque trou borgne (18) communique pour son alimentation en agent de refroidissement avec le coussinet de la tête de bielle par un canal (20) réalisé dans la partie inférieure (2) du piston.

2. Piston selon la revendication 1, caractérisé en ce qu'une cavité (14) recueillant l'agent de refroidissement s'évacuant des trous borgnes (18) est réalisée entre la partie supérieure (1) et la partie inférieure (2) du piston du côté intérieur par rapport à la surface annulaire d'appui (16).

3. Piston selon la revendication 2, caractérisé en ce que la cavité (14) communique avec les trous borgnes (18) par des rainures radiales (23) réalisées dans la surface de la partie inférieure (2) du piston qui est en contact avec la surface d'appui (16).

4. Piston selon l'une des revendications 1 à 3, caractérisé en ce que l'extrémité de la bielle (4) montée dans la partie inférieure (2) du piston est conformée en tête sphérique.
